# EUROPEAN PATENT SPECIFICATION

(11) **EP 1 855 840 B1**
(45) Date of publication and mention of the grant of the patent: **27.05.2009**
(21) Application number: 06709906.9
(22) Date of filing: 27.02.2006
(51) Int. Cl.: B24B 41/04, B24B 7/00

(54) **MACHINING SPINDLES**
BEARBEITUNGSSPINDELN
BROCHES D USINAGE

(30) Priority: 01.03.2005 GB 0504228
(43) Date of publication of application: 21.11.2007
(73) Proprietor: GSI Group Limited, Swift Valley Rugby Warwickshire CV21 1QN (GB)
(72) Inventor: HOCKLEY, Stephen, Robert, Southampton Hampshire SO52 9GB (GB)
(74) Representative: Faulkner, Thomas John
(86) International application number: PCT/GB2006/000679
(87) International publication number: WO 2006/092568

(56) References cited:
- EP-A- 1 000 704
- WO-A-03/022518
- WO-A-03/101695
- US-B1- 6 336 849

## Description

This invention relates to machining spindles as per the preamble of claim 1. An example of such a spindle is disclosed by EP 1.000.704 A. Of particular interest are machining spindles which may be used in industrial grinding processes for, for example, the grinding of silicon wafers for use in the semiconductor industries.

Many grinding spindles are arranged to rotate at relatively high speeds of rotation. In the case of grinding silicon wafers this may be in the order of 8,000 rpm. Furthermore, there is often a need to perform a two stage grinding process where first of all a coarser grinding wheel is used to remove bulk material and then a finishing grinding wheel is used to achieve the desired finish.

In performing such grinding operations it can be important to be able to achieve a high degree of positional accuracy of the grinding wheels relative to the workpiece.

The same considerations apply at least to some extent for machining spindles that are used for different processes besides grinding.

To help in situations where it is desirable to carry out a two stage procedure, for example by grinding first with a coarse grinding wheel and then with a finishing grinding wheel, some existing systems make use of an arrangement in which there are two shafts which are arranged to rotate about a common axis with one of the shafts running within the other shaft. In such a case each shaft is arranged to carry a tool and these may be selectively applied to the workpiece for machining, for example for grinding.

In such spindles, it is necessary to provide a mechanism for driving the shafts relative to one another in an axial direction so that at some points in time the tool carried by one of the shafts acts on the workpiece and at other points in time, the tool carried by the other shaft acts on the workpiece.

In some existing systems, a mechanical means of driving the shafts relative to one another is used. In particular, it is common in existing systems, to make use of a spring pack arranged so that the inner shaft is driven back into a retracted position under the action of a spring.

However, such a system can be disadvantageous since the mechanism used to force the inner shaft out into an extended position must work against the spring force. Due to frictional variation problems with current spring packs, the compression force required to act against the spring pack to force the inner shaft forwards can vary considerably and furthermore spring creep can occur over a short period of time as the springs settle in their compressed state. In addition, over a long period of time spring fade can occur. The problems relating to frictional variation and spring creep can cause difficulties when it is desired to achieve accurate positional repeatability of the inner shaft when in the extended position. Spring fade can cause problems in the retracted position as the inner shaft may not be held in its retracted position strongly enough to avoid undesirable noise and/or vibration.

Furthermore, in practical systems, the springs required to give the necessary forces have to be relatively large and using such springs inside a system which is to rotate at high rotational speeds can lead to balance problems causing variable vibration of the shaft assembly. Such vibrations can affect the quality of the machining process, for example the surface finish of a ground wafer may be affected.

EP 1,000,704 describes a polishing device with first and second polishing means disposed on respective co-axial shafts that can move axially relative to one another to enable selective use of each polishing means. An actuator for moving the shafts axially relative to another which is pneumatically operated is provided. That actuator is static, such that the shafts rotate relative to it, and is fed with air via conventional external hosing or tubing.

It is an object of the present invention to alleviate at least some of the problems associated with the prior art.

According to one aspect of the present invention there is provided a machining spindle comprising an inner shaft arranged for carrying a first tool for machining a workpiece and an outer shaft arranged for carrying a second tool for machining the workpiece, the shafts being mounted for rotation about a common axis and for axial movement relative to each other, and the machining spindle further comprising a main body within which the shafts are journalled, the inner shaft being mounted within the outer shaft which in turn is journalled within the main body, wherein the inner shaft and outer shaft are moveable relative to one another between a first state and a second state, the inner shaft being further retracted relative to the outer shaft in the second state than in the first state and the machining spindle comprising a fluid pressure driven actuator arrangement for driving the shafts from the first state to the second state and for driving the shafts from the second state to the first state, characterised in that at least one of the inner shaft and the outer shaft comprises at least part of a fluid supply channel for feeding fluid to the fluid pressure driven actuator arrangement.

This arrangement allows the inner shaft, and hence a tool being carried by the inner shaft, to be retracted using, for example, pneumatic actuation. It can remove the need for a spring retraction system or another mechanical retraction system which is prone to wear, vibration or failure, especially in high rotational speed systems.

The fluid pressure driven actuator arrangement may comprise a double acting piston assembly. A plurality of pistons may be provided. These may be arranged in an axial array, ie behind one another in the axial direction. Feeds may be provided to each side of each piston. Such an arrangement allows a greater force to be applied to the inner shaft - in extension and/or retraction.

The fluid pressure driven actuator arrangement may be disposed within the outer shaft. The fluid pressure driven actuator arrangement may be arranged to rotate with the outer shaft.

There may be two fluid supply channels. A first channel may be for feeding fluid to the fluid pressure driven actuator arrangement to drive the shafts from the first state to the second state and a second channel may be for feeding fluid to the fluid pressure driven actuator arrangement to drive the shafts from the second state to the first state.

At least respective portions of the first and second channels may be circumferentially spaced from one another. The first and second channels may each have a respective inlet for receiving driving fluid. The respective inlets may be axially spaced from one another. Here the terms circumferential and axial refer to the geometry of the spindle and/or that of the component in which the channels and inlets are respectively defined.

The spindle may comprise a fluid supply portion for supplying fluid to the channels via the respective inlets. The fluid supply portion may define an aperture into which the component defining the channel inlets projects. The fluid supply portion may have a surface which faces the inlets to the channels. The surface may comprise two outlets which are axially spaced from one another. A first of the outlets may be arranged for feeding air to a first of the inlets and a second of the outlets may be arranged for feeding air to a second of the inlets. Each outlet may have an associated groove disposed in the surface of the fluid supply portion. Hence there may be two axially spaced grooves defined by the surface of the fluid supply portion.

The axial spacing of the outlets and/or grooves may be the same as the axial spacing of the inlets. A first of the outlets and/or grooves may be axially aligned with a first of the inlets. A second of the outlets and/or grooves may be axially aligned with a second of the inlets.

The fluid supply portion may be generally annular. The outlets and/or grooves may be provided in the inner circumferential surface of the annular fluid supply portion.

The fluid supply portion may comprise a bearing. The fluid supply portion may comprise a seal bearing. The fluid supply portion may comprise a non-contact seal bearing. The fluid supply portion may be mounted to the main body of the spindle.

The outer shaft may comprise an extension portion which defines at least a portion of the first and second channels. The extension portion may define the channel inlets. The extension portion may extend beyond a region occupied by the inner shaft.

The extension portion may project into the aperture formed in the fluid supply portion. The extension portion may comprise a surface in which the channel inlets are defined and which faces the surface of the fluid supply portion defining the inlets and/or grooves.

In one embodiment there is a spindle in which the fluid supply portion has a bore in which is disposed the extension portion into which fluid is to be supplied, wherein a surface of the bore comprises two fluid supply grooves which are axially spaced from one another and are arranged to be separately fed with fluid, and the extension portion comprises two separate fluid channels each having a respective inlet, the inlets being axially spaced from one another and each axially aligned with a respective one of the grooves.

The spindle may comprise at least one dead stop portion for limiting the travel of the inner and outer shafts relative to one another. The dead stop portion may be arranged for determining the relative positions of the inner and outer shafts in the first state. This first state may correspond to the positions in which the shafts are disposed when a tool carried by the inner shaft contacts with a work piece.

A second dead stop portion may be arranged for determining the relative positions of the inner and outer shafts in the second state. The inner and outer shafts may comprise respective mating tapers. The mating tapers when fully engaged may determine the relative positions of the inner and outer shafts in the second state. The second state may correspond to the inner shaft being fully retracted so that only a tool carried by the outer shaft contacts with a workpiece in use.

Preferably the fluid pressure driven actuator arrangement comprises a pneumatic actuator arrangement. Such an arrangement may be driven by high pressure air fed into the spindle.

Preferably the spindle comprises at least one air bearing. In such a case, the provision of a pneumatic actuation system is particularly advantageous. The spindle may be arranged so that an air supply fed to the air bearing may also be fed to the fluid pressure driven actuator arrangement.

Embodiments of the present invention will now be described, by way of example only, with reference to the accompanying drawings in which:
Figure 1 shows in section a machining spindle embodying the present invention;
Figure 2 shows a pneumatic actuator arrangement of the spindle shown in Figure 1 on a different section through the spindle and at an enlarged scale to increase clarity;
Figure 3 shows, in section, a fluid supply seal bearing of the spindle shown in Figure 1; and
Figure 4 shows, in section, part of the spindle shown in Figure 1 and illustrates one of a pair of drive pins used to transfer drive between two shafts of the spindle.

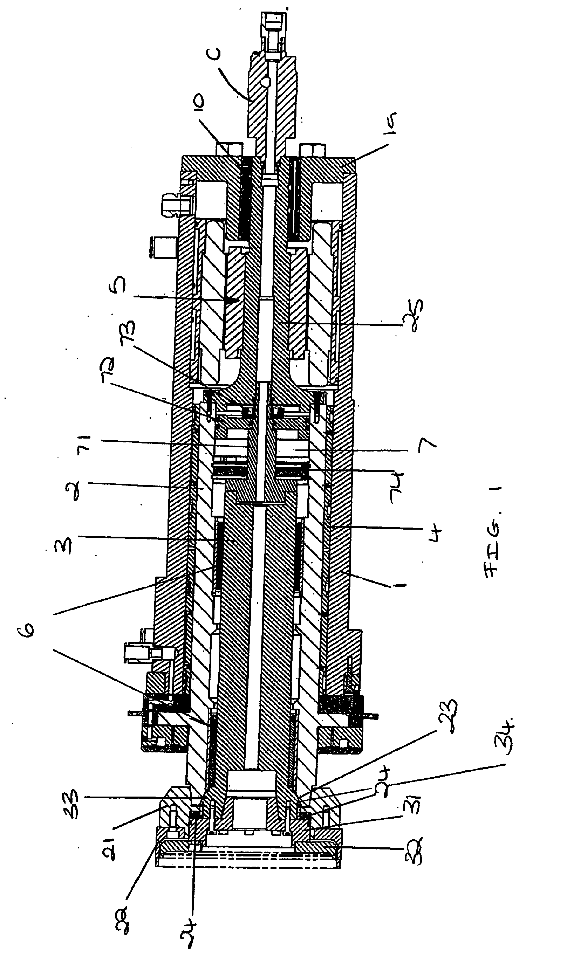

Figure 1 shows, in section, a machining spindle, which in this case is a grinding spindle. The machining spindle generally comprises a main body 1 within which is journalled a dual shaft assembly comprising an outer shaft 2 and mounted within the outer shaft 2 for axial movement relative thereto an inner shaft 3. The outer shaft 2 is journalled for rotation within a radial air bearing 4 and a motor 5 is provided for rotatingly driving the outer shaft 2 and hence the whole shaft assembly relative to the main body 1. The outer shaft 2 comprises an outer grinding wheel mount 21 to which is mounted an outer grinding wheel 22. Similarly, the inner shaft 3 comprises an inner shaft grinding wheel mount 31 to which is mounted an inner grinding wheel 32

In the position shown in Figure 1, the inner shaft 3 is in a retracted position relative to the outer shaft 2 and as such the outer grinding wheel 22 projects beyond the inner grinding wheel 32. It will be appreciated that this means that if the spindle is brought into contact with a workpiece, the workpiece will be acted upon by the outer grinding wheel 22 but not the inner grinding wheel 32 (assuming that the workpiece is generally planar). However, as mentioned above, the inner shaft 3 is arranged for axial movement relative to the outer shaft 2. Thus, the inner shaft 3 may be moved towards a more extended position (towards the left in the orientation of the spindle as shown in Figure 1) such that the inner grinding wheel 32 projects beyond the outer grinding wheel 22. In such a situation, if the spindle is brought into contact with a workpiece (whilst the shaft assembly is rotating) the inner grinding wheel 32 will act on and grind the workpiece (again assuming the workpiece is generally planar).

This general configuration of having an inner shaft 3 which is able to move axially within an outer shaft 2 thereby to selectively machine a workpiece using a tool mounted on the inner shaft or a tool mounted on the outer shaft is the general overall function which the present spindle is arranged to perform. Some more detailed aspects of its construction and operation as will be described below and are of more interest in the present specification.

With the inner shaft in its retracted position as shown in Figure 1, a convexly curved tapered portion 33 of the inner shaft 3 is in intimate contact with a concavely tapered portion 23 of the outer shaft 2. The intimate interfacing of these two tapers 23, 33 prevents further retraction of the inner shaft 3 into the outer shaft 2 and holds the inner shaft in a firmly fixed relationship relative to the outer shaft 2. Therefore these tapers 23, 33 define one end of the inner shaft's 3 travel relative to the outer shaft 2.

The outer wheel mount 21 comprises a ring-like stop member 24 having a rebate at its radially inner edge. The inner shaft 3 has a stop portion 34 which comprises a radial ledge which is arranged to abut against the ledge of the outer shaft stop member 24 formed by the radially inner edge rebate when the inner shaft is in its position of maximum allowed extension. That is to say the two stop members 24 and 34 are arranged so that when the inner shaft 3 is driven towards an extended position, further travel of the inner shaft 3 relative to the outer shaft 2 is stopped by a contact between the two stop members. Travel is therefore is stopped at an accurately determined and repeatable position. This means that the inner grind wheel is also at an accurately defined and repeatable position relative to the spindle when the inner shaft 3 is in its extended position.

It should be noted that these stop portions are in the vicinity of the grinding wheels 22, 32 and in fact are adjacent thereto. This further helps to achieve an accurate repeatable position for the inner grinding wheel 32 in its extended position since there are fewer components between those components 24, 34 determining the dead stop position and the wheel 32 itself than would be the case if the dead stop components were provided further away. This reduces the possibility of the position of the inner grinding wheel in the extended position varying due to factors such as wear, manufacturing tolerances, and temperature (thermal growth).

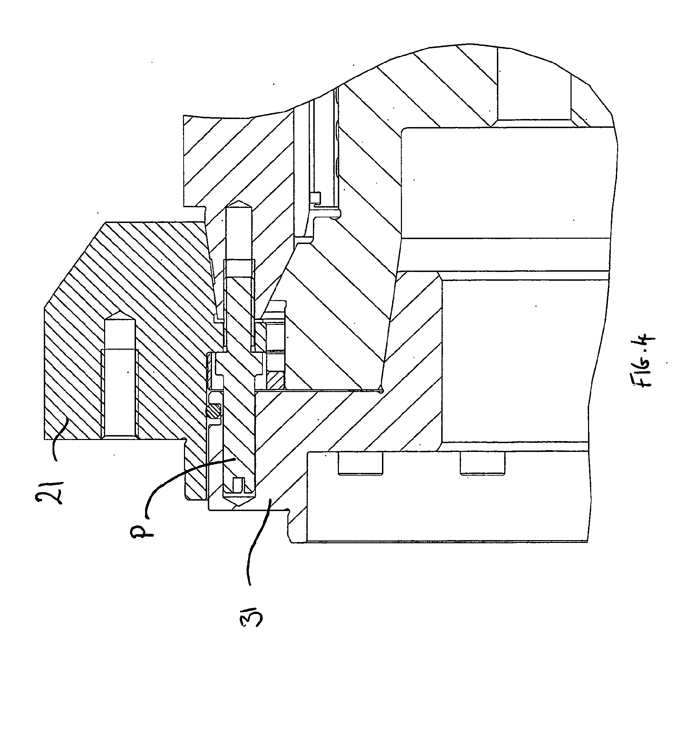

In the present embodiment it should be noted that there is no relative rotation between the inner shaft 3 and outer shaft 2. Drive pins P are provided to transfer rotational drive from the outer shaft 2 to inner shaft 3. These are screwed into the outer wheel mount 21 (two are currently used although only one of these can be seen in the drawings, in Figure 4) and are used to replace the corresponding number of fixing screws. A projecting plain shank portion of the drive pin aligns with blind holes in the inner wheel mount 21. This effectively 'pegs' the wheel mounts 21, 31, and hence the shafts 2, 3 together.

The engagement of the drive pins P into the inner wheel mount 31 is such that even at maximum advanced stroke, there is still engagement of the pins. An advantage of the drive pins being located at the nose of the spindles is to maximise the torsional rigidity of the shaft coupling mechanism. The axial motion of the inner shaft 3 relative to the outer shaft 2 is guided by two sets of linear ball bearing racks 6.

The inner shaft 3 is driven between its retracted position (as shown in Figure 1) and its extended position (where the inner grinding wheel 32 extends beyond the outer grinding wheel 22) by a fluid pressure driven actuator arrangement which in the present embodiment takes the form of a pneumatic actuator arrangement 7.

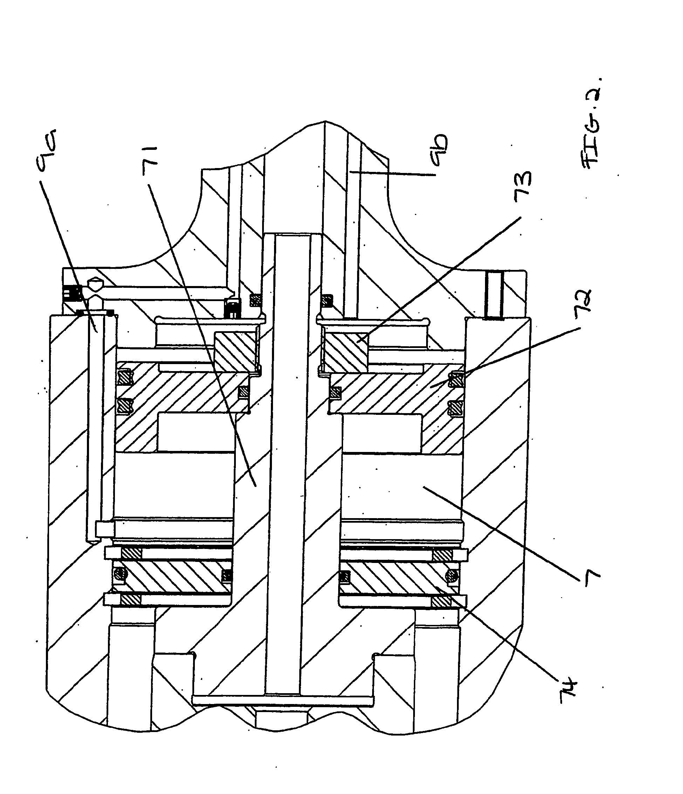

The details of the pneumatic actuator arrangement can be more clearly seen in Figure 2. The pneumatic actuator arrangement 7 is a double acting pneumatic actuator which is arranged to both drive the inner shaft from the retracted position (shown in Figure 1) to the extended position and also drive the inner shaft 3 from the extended position back towards the retracted position.

A piston stem portion 71 is provided at the end of the inner shaft 3 which is opposite to that which carries the grinding wheel 32. A double acting piston member 72 is mounted on the piston stem 71 and locked in position by a ring nut 73. The piston 72 is arranged to travel within a chamber which is sealed from the remainder of the spindle by virtue of a piston seal plate 74 (disposed in the outer shaft 22 and through which the piston stem 71 passes), the internal curved wall of the main part of the outer shaft 2, and an outer shaft extension portion 25 which is mounted to the main portion of the outer shaft 2.

It will be noted that the pneumatic actuator arrangement 7 is arranged to rotate with the outer shaft 2. In the present embodiment the pneumatic actuator arrangement 7 thus rotates with both shafts 2,3 - the shaft assembly. This includes the piston housing made up of the parts mentioned in the preceding paragraph.

If pressurised air is fed to the side of the piston 72 on which the piston seal plate 74 is provided, i.e. that side nearest the free end of the shaft to which the tools are mounted, the piston 72 is driven away from the end of the shaft to which the tools are mounted, and hence the inner shaft 3 is drawn into the retracted position 3 as shown in Figure 1. This travel occurs until the mating taper surfaces 33 and 34 contact with one another. On the other hand, if pressurised air is fed to the opposite side of the piston 73, the piston 73 is driven towards the end of the shaft on which the tools 22, 32 are mounted, and hence the inner shaft 3 is driven to towards its extended position until the stop portions 24 and 34 firmly abut one another.

Thus, by controlling the supply of air to the chambers on either side of the piston 72, it is possible to drive the inner shaft 3 between the retracted and extended positions.

Channels 9a, 9b for supplying pressurised air to either side of the piston 72 are provided and can be seen in Figure 2. A first channel 9a is arranged for supplying air to the side of the piston 72 nearest to the end of the shafts 2, 3 at which the tools 22, 32 are mounted and a second channel 9b is provided for supplying air to the opposite side of the piston 72. An air supply seal bearing 10 is provided at the end of the spindle opposite to that at which the tools 32, 22 are mounted. This air supply seal bearing 10 is arranged to supply air to the first and second supply channels 9a and 9b.

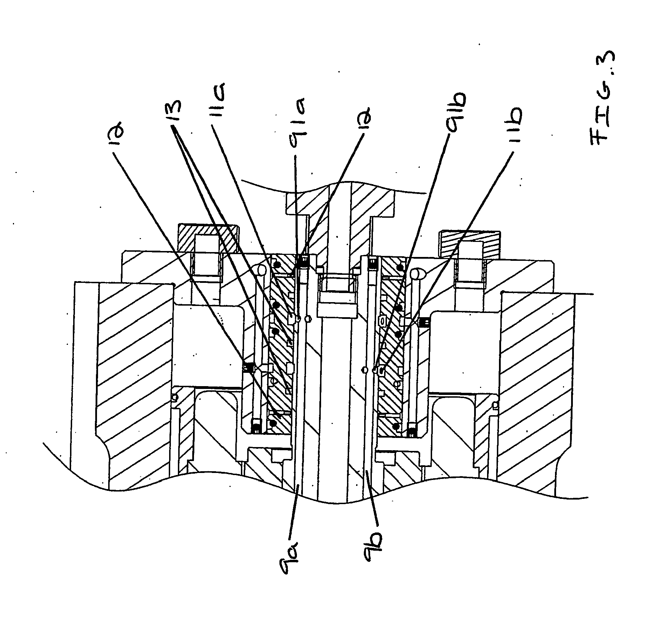

The first air supply channel 9a passes from the region of the air supply seal bearing 10 via a gallery 9a provided in the extension portion 25 until it meets the main portion of the outer shaft 2 at which point it progresses through this to the side of the piston 71 nearest to the end of the shafts 2, 3 at which the tools 23, 32 are mounted. On the other hand the second air supply channel 9b comprises a gallery 9b provided in the extension portion 25 from the region of the air supply seal bearing 10 and directly exiting into the chamber on the opposite side of the piston 72. As can be seen from Figures 2 and 3, the two air supply channels, or at least those portions of the air supply channels 9a, 9b in the extension portion 25, are circumferentially spaced from one another.

Each air supply channel 9a, 9b has a respective inlet 91a, 91b in the region of the air supply seal bearing 10. These air supply inlets 91a, 91b are axially spaced from one another. In the present embodiment these air supply inlets are also circumferentially spaced from one another.

The air supply seal bearing 10 is a generally annular component which is mounted in the rear cover 1a of the main body of the spindle 1. The inner curved surface of the air supply seal bearing 10 faces the outer curved surface of the extension portion 25 as this passes into and in this case, through the bore of the air supply seal bearing 10. The inner curved surface of the air supply seal bearing 10 comprises two circumferential grooves 11a and 11b which are axially spaced from one another. The first of these circumferential grooves 11a is axially aligned with the inlet 91a to the first of the air supply channels 9a and a second of the circumferential grooves 11b is axially aligned with the inlet 91b of the second air supply channel 9b. In a less preferred alternative, a circumferential groove may be provided in the outer surface of the extension portion in place of the simple inlets 91a, 91b and simple outlets provided instead of the circumferential grooves 11a, 11b.

The air supply seal bearing 10 also comprises air jets 12 which enable the bearing to act as a air bearing and provide sealing, and exhaust air grooves 13 to allow exhaust air from the air bearing formed by the air supply seal bearing 10 to escape. It should be noted that the air supply seal bearing 10 is a non-contact seal bearing which is arranged to supply two separate air feeds to the outer shaft extension portion 25.

Although not shown in detail, separate respective air supplies are provided to the axially spaced circumferential grooves 11a, 11b which are independently controllable. This means that air may be selectably fed to one or other side of the piston 72. Furthermore, valves are provided which allow each of the grooves 11a, 11b to be selectively connected to an air supply to feed air to the relevant side of the piston 72 or connected to allow air from the relevant side of the piston to exhaust to the atmosphere.

The air supply seal bearing 10 allows the delivery of two independent air supplies to the shaft.

In operation of the spindle, when air is being fed to the chamber on one side of the piston 72 via one of the respective air channels 9a, 9b the other respective air channel 9a, 9b is connected to atmosphere so that the air in the chamber on the respective side of the piston may escape. In this way a known air pressure may be applied to one side of the piston 72 and a reproducible force exerted on the inner shaft 3 as the air on the other side of the piston 72 is allowed to escape.

In operation of the present spindle, air pressure is maintained to one or other sides of the piston 72 at nearly a11 times in order to keep the inner shaft 3 in the fully extended or fully retracted position. When it is desired to change the state of the system from the fully retracted state to the fully extended state this may be done in a controlled manner by using the valves (not shown) to control the delivery of air and release of air from the respective sides of the piston 72 in a controlled manner.

For the sake of completeness it is mentioned that the central bore through the outer shaft extension portion 25, the piston stem portion 71 and the inner shaft 3 is for providing coolant to the grinding wheels during operation. A rotary coupling C is provided between the supply of this coolant and the end of the central bore remote from the grinding wheels 22, 32.

In a development a common non-contacting air bearing seal unit may be provided to give the combined function of the air supply seal bearing described above and the rotary coupling for allowing delivery of coolant fluid. Such a common seal unit would replace the air supply seal bearing and rotary coupling. Such a device can help remove undesirable vibration effects that might be caused by the rotary coupling due to its contacting seal faces.

The current embodiment allows the inner shaft 3 to be axially moved relative to the outer shaft 2 whilst the shaft assembly 23 is rotating and the removal of mechanical components from the extension and retraction mechanisms together with the ability to closely control the speed of extension and retraction of the inner shaft 3 can significantly enhance smooth running and avoid undesirable effects which would be caused by vibrations.

The avoidance of mechanical parts gives improved positional repeatability characteristics and reduces the need for maintenance. It furthermore reduces or removes the problems associated with positional creep, non-balanced systems, vibrations and spring fade.

In a development, a plurality of pistons may be provided. These may be arranged in an axial array, ie behind one another in the axial direction. Feeds may be provided to each side of each piston. Such an arrangement allows a greater force to be applied to the inner shaft - in extension and/or retraction.

## Claims

1. A machining spindle comprising an inner shaft (3) arranged for carrying a first tool (32) for machining a workpiece and an outer shaft (2) arranged for carrying a second tool (22) for machining the workpiece, the shafts being mounted for rotation about a common axis and for axial movement relative to each other, and the machining spindle further comprising a main body (1) within which the shafts (2, 3) are journalled, the inner shaft (3) being mounted within the outer shaft (2) which in turn is journalled within the main body (1), wherein the inner shaft (3) and outer shaft (2) are moveable relative to one another between a first state and a second state, the inner shaft (3) being further retracted relative to the outer shaft (2) in the second state than in the first state and the machining spindle comprising a fluid pressure driven actuator arrangement (7) for driving the shafts (2, 3) from the first state to the second state and for driving the shafts (2, 3) from the second state to the first state, **characterised in that** at least one of the inner shaft (3) and the outer shaft (2) comprises at least part of a fluid supply channel (9a, 9b) for feeding fluid to the fluid pressure driven actuator arrangement (7).

2. A machining spindle according to any preceding claim in which the fluid pressure driven actuator arrangement (7) is disposed within the outer shaft (2).

3. A machining spindle according to claim 1, or claim 2 in which the fluid pressure driven actuator arrangement is arranged to rotate with the outer shaft (2).

4. A machining spindle according to any preceding claim in which the fluid pressure driven actuator arrangement (7) comprises a double acting piston assembly (72).

5. A machining spindle according to any preceding claim in which the fluid pressure driven actuator arrangement (7) comprises a plurality of pistons.

6. A machining spindle according to any preceding claim in which there are two fluid supply channels (9a, 9b), a first of the channels (9b) being for feeding fluid to the fluid pressure driven actuator arrangement (7) to drive the shafts from the first state to the second state and a second of the channels (9a) being for feeding fluid to the fluid pressure driven actuator arrangement (7) to drive the shafts from the second state to the first state.

7. A machining spindle according to claim 6 in which at least respective portions of the first and second channels (9a, 9b) are circumferential spaced from one another.

8. A machining spindle according to claim 6 or claim 7 in which the first and second channels (9a, 9b) each have a respective inlet (91a, 91b) for receiving driving fluid and the respective inlets are axially spaced from one another.

9. A machining spindle according to claim 8 in which the spindle comprises a fluid supply portion (10) for supplying fluid to the channels via the respective inlets.

10. A machining spindle according to claim 9 in which the fluid supply portion (10) defines an aperture into which the component (25) defining the channel inlets projects.

11. A machining spindle according to claim 9 or claim 10 in which the fluid supply portion (10) has a surface which faces the inlets (91a, 91b) to the channels.

12. A machining spindle according to claim 11 in which the surface comprises two outlets (11a, 11b) which are axially spaced from one another.

13. A machining spindle according to claim 12 in which a first of the outlets (11a) is arranged for feeding air to a first of the inlets (91a) and a second of the outlets (11b) is arranged for feeding air to a second of the inlets (91b).

14. A machining spindle according to claim 12 or claim 13 in which each outlet has an associated groove (11a, 11b) disposed in the surface of the fluid supply portion so that there are two axially spaced grooves (11a, 11b) defined by the surface of the fluid supply portion.

15. A machining spindle according to claim 13 or claim 14 in which a first of the outlets is axially aligned with a first of the inlets and a second of the outlets is axially aligned with a second of the inlets.

16. A machining spindle according to any one of claims 9 to 15 in which the fluid supply portion (10) is generally annular.

17. A machining spindle according to claim 16 when dependent on claim 12 in which the outlets are provided in the inner circumferential surface of the annular fluid supply portion (10).

18. A machining spindle according to any one of claims 9 to 17 in which the fluid supply portion (10) comprises a non-contact seal bearing.

19. A machining spindle according to any preceding claim when dependent on claim 6 in which the outer shaft (2) comprises an extension portion (25) which defines at least a portion of the first and second channels (9a, 9b) and extends beyond a region occupied by the inner shaft (3).

20. A machining spindle according to any preceding claim which comprises a fluid supply portion (10) having a bore in which is disposed an extension portion (25) of the outer shaft (2) into which fluid is to be supplied, wherein a surface of the bore comprises two fluid supply grooves (11a, 11b) which are axially spaced from one another and are arranged to be separately fed with fluid, and the extension portion (25) comprises two separate fluid channels (9a, 9b) each having a respective inlet (91a, 91b), the inlets (91a, 91b) being axially spaced from one another and each axially aligned with a respective one of the grooves (11a, 11b).

21. A machining spindle according to any preceding claim in which the spindle comprises at least one dead stop portion (23, 24, 33, 34) for limiting the travel of the inner and outer shafts (3, 2) relative to one another.

22. A machining spindle according to claim 21 in which the dead stop (24, 34) portion is arranged for determining the relative positions of the inner and outer shafts (3, 2) in the first state.

23. A machining spindle according to claim 22 in which a second dead stop portion (23, 33) is arranged for determining the relative positions of the inner and outer shafts (3, 2) in the second state.

24. A machining spindle according to claim 23 in which the inner and outer shafts (3, 2) comprise respective mating tapers (33, 23) and the mating tapers when fully engaged determine the relative positions of the inner and outer shafts (3, 2) in the second state.

25. A machining spindle according to any preceding claim in which the fluid pressure driven actuator arrangement (7) comprises a pneumatic actuator arrangement.

26. A machining spindle according to any preceding claim in which the spindle comprises at least one air bearing (4).

## Patentansprüche

1. Eine Bearbeitungsspindel umfassend eine innere Welle (3), die angeordnet ist, um ein erstes Werkzeug (32) zum Bearbeiten eines Werkstücks zu tragen, und eine äußere Welle (2), die angeordnet ist, um ein zweites Werkzeug (22) zum Bearbeiten des Werkstücks zu tragen, wobei die Wellen zur Drehung um eine gemeinsame Achse und zur axialen Bewegung im Bezug zueinander befestigt sind, und die Bearbeitungsspindel umfasst weiterhin einen Hauptkörper (1), innerhalb dessen die Wellen (2, 3) eingesetzt sind, während die innere Welle (3) innerhalb der äußeren Welle (2) befestigt ist, die wiederum in den Hauptkörper (1) eingesetzt ist, wobei die innere Welle (3) und die äußere Welle (2) im Bezug zueinander zwischen einem ersten Zustand und einem zweiten Zustand bewegbar sind, wobei die innere Welle (3) im Bezug auf die äußere Welle (2) im zweiten Zustand weiter zurückgezogen ist als im ersten Zustand, und die Bearbeitungsspindel umfasst eine mit Flüssigkeitsdruck angetriebene Stellgliedanordnung (7) zum Treiben der Wellen (2, 3) von dem ersten Zustand in den zweiten Zustand und zum Treiben der Wellen (2, 3) von dem zweiten Zustand in den ersten Zustand, **dadurch gekennzeichnet, dass** mindestens die innere Welle (3) oder die äußere Welle (2) mindestens teilweise einen Flüssigkeitsversorgungskanal (9a, 9b) zum Zuführen von Flüssigkeit zu der mit Flüssigkeitsdruck angetriebenen Stellgliedanordnung (7) umfasst.

2. Eine Bearbeitungsspindel gemäß einem der vorhergehenden Ansprüche, in der die mit Flüssigkeitsdruck angetriebene Stellgliedanordnung (7) innerhalb der äußeren Welle (2) angeordnet ist.

3. Eine Bearbeitungsspindel gemäß Anspruch 1 oder Anspruch 2, in der die mit Flüssigkeitsdruck angetriebene Stellgliedanordnung angeordnet ist, um mit der äußeren Welle (2) zu drehen.

4. Eine Bearbeitungsspindel gemäß einem der vorhergehenden Ansprüche, in der die mit Flüssigkeitsdruck angetriebene Stellgliedanordnung (7) eine doppelt wirkende Kolbenanordnung (72) umfasst.

5. Eine Bearbeitungsspindel gemäß einem der vorhergehenden Ansprüche, in der die mit Flüssigkeitsdruck angetriebene Stellgliedanordnung (7) eine Mehrzahl von Kolben aufweist.

6. Eine Bearbeitungsspindel gemäß einem der vorhergehenden Ansprüche, die zwei Flüssigkeitsversorgungskanäle (9a, 9b) aufweist, einen ersten der Kanäle (9b) zum Zuführen der Flüssigkeit zu der mit Flüssigkeitsdruck angetriebenen Stellgliedanordnung (7), um die Wellen aus dem ersten Zustand in den zweiten Zustand zu treiben, und einen zweiten der Kanäle (9a) zum Zuführen von Flüssigkeit zu der mit Flüssigkeitsdruck angetriebenen Stellgliedanordnung (7), um die Wellen aus dem zweiten Zustand, in den ersten Zustand zu treiben.

7. Eine Bearbeitungsspindel gemäß Anspruch 6, in der mindestens entsprechenden Bereiche der ersten und zweiten Kanäle (9a, 9b) umfänglich voneinander beabstandet sind.

8. Eine Bearbeitungsspindel gemäß Anspruch 6 oder Anspruch 7, in der der erste und zweite Kanal (9a, 9b) jeweils einen entsprechenden Einlass (91a, 91b) zum Aufnehmen der antreibenden Flüssigkeit aufweisen und in der die entsprechenden Einlässe axial voneinander beabstandet sind.

9. Eine Bearbeitungsspindel gemäß Anspruch 8, in der die Spindel einen Flüssigkeitsversorgungsbereich (10) zum Versorgen der Kanäle mit Flüssigkeit über die entsprechenden Einlässe aufweist.

10. Eine Bearbeitungsspindel gemäß Anspruch 9, in der der Flüssigkeitsversorgungsbereich (10) eine Öffnung definiert, in die die Komponente (25) hineinragt, die die Kanaleinlässe definiert.

11. Eine Bearbeitungsspindel gemäß Anspruch 9 oder Anspruch 10, in der der Flüssigkeitsversorgungsbereich (10) eine Oberfläche aufweist, die den Einlässen (91a, 91b) der Kanäle gegenüberliegt.

12. Eine Bearbeitungsspindel gemäß Anspruch 11, in der die Oberfläche zwei Auslässe (11a, 11b) aufweist, die axial voneinander beabstandet sind.

13. Eine Bearbeitungsspindel gemäß Anspruch 12, in der ein erster der Auslässe (11a) zum Zuführen von Luft zu einem ersten der Einlässe (91a) und ein zweiter der Auslässe (11b) zum Zuführen von Luft zu einem zweiten der Einlässe (91b) angeordnet ist.

14. Eine Bearbeitungsspindel gemäß Anspruch 12 oder Anspruch 13, in der jeder Auslass eine dazugehörige Rille (11a, 11b) aufweist, die in der Oberfläche des Flüssigkeitsversorgungsbereichs angeordnet ist, so dass zwei axial beabstandete Rillen (11a, 11b) vorhanden sind, die durch die Oberfläche des Flüssigkeitsversorgungsbereichs definiert sind.

15. Eine Bearbeitungsspindel gemäß Anspruch 13 oder Anspruch 14, in der ein erster der Auslässe axial mit einem ersten der Einlässe und ein zweiter der Auslässe axial mit einem zweiten der Einlässe ausgerichtet ist.

16. Eine Bearbeitungsspindel gemäß einem der Ansprüche 9 bis 15, in der der Flüssigkeitsversorgungsbereich (10) im Wesentlichen ringförmig ist.

17. Eine Bearbeitungsspindel gemäß Anspruch 16 in Abhängigkeit von Anspruch 12, in der die Auslässe in der inneren umlaufenden Oberfläche des ringförmigen Flüssigkeitsversorgungsbereichs (10) bereitgestellt sind.

18. Eine Bearbeitungsspindel gemäß einem der Ansprüche 9 bis 17, in der der Flüssigkeitsversorgungsbereich (10) ein berührungsfreies Dichtungslager umfasst.

19. Eine Bearbeitungsspindel gemäß einem der vorhergehenden Ansprüche in Abhängigkeit von Anspruch 6, in der die äußere Welle (2) einen Ausdehnungsbereich (25) aufweist, der mindestens einen Bereich der ersten und zweiten Kanäle (9a, 9b) definiert und sich über eine durch die innere Welle (3) eingenommene Region hinaus erstreckt.

20. Eine Bearbeitungsspindel gemäß einem der vorhergehenden Ansprüche, die aufweist:
einen Flüssigkeitsversorgungsbereich (10) mit einem Bohrloch, in dem ein Ausdehnungsbereich (25) der äußeren Welle (2) angeordnet ist, in die die Flüssigkeit geleitet wird, während eine Oberfläche des Bohrlochs zwei Flüssigkeitsversorgungsrillen (11a 11b) umfasst, die axial voneinander beabstandet und angeordnet sind, um getrennt voneinander mit Flüssigkeit versorgt zu werden, wobei der Ausdehnungsbereich (25) zwei getrennte Fluidkanäle (9a, 9b) umfasst, von denen jeder einen entsprechenden Einlass (91a, 91b) aufweist, während die Einlässe (91a, 91b) axial voneinander beabstandet und jeweils axial mit einer entsprechenden der Rillen (11a, 11b) ausgerichtet sind.

21. Eine Bearbeitungsspindel gemäß einem der vorhergehenden Ansprüche, in der die Spindel mindestens einen Anschlagsbereich (23, 24, 33, 34) zum Beschränken der Bewegung der inneren und äußeren Wellen (3, 2) im Bezug zueinander aufweist.

22. Eine Bearbeitungsspindel gemäß Anspruch 21, in der der Anschlagsbereich (24, 34) zum Bestimmen der Relativstellungen der inneren und äußeren Wellen (3, 2) im ersten Zustand angeordnet ist.

23. Eine Bearbeitungsspindel gemäß Anspruch 22, in der ein zweiter Anschlagsbereich (22, 32) angeordnet ist, um die Relativstellungen der inneren und äußeren Wellen (3, 2) im zweiten Zustand zu bestimmen.

24. Eine Bearbeitungsspindel gemäß Anspruch 23, in der die inneren und äußeren Wellen (3, 2) zueinander passende Verjüngungen (33, 23) aufweisen und die passenden Verjüngungen bestimmen die Relativstellungen der inneren und äußeren Wellen (3, 2) im zweiten Zustand, wenn sie vollständig miteinander in Eingriff stehen.

25. Eine Bearbeitungsspindel gemäß einem der vorhergehenden Ansprüche, in der die mit Flüssigkeitsdruck angetriebene Stellgliedanordnung (7) eine pneumatische Stellgliedanordnung aufweist.

26. Eine Bearbeitungsspindel gemäß einem der vorhergehenden Ansprüche, in der die Spindel mindestens ein Luftlager (4) umfasst.

## Revendications

1. Broche d'usinage comprenant un arbre interne (3) agencé pour porter un premier outil (32) destiné à usiner une pièce de fabrication et un arbre externe (2) agencé pour porter un second outil (22) destiné à usiner la pièce de fabrication, les arbres étant montés pour rotation autour d'un axe commun et pour un mouvement axial l'un par rapport à l'autre, et la broche d'usinage comprenant en outre un corps principal (1) à l'intérieur duquel les arbres (2, 3) sont tourillonnés, l'arbre interne (3) étant monté à l'intérieur de l'arbre externe (2) qui est lui-même tourillonné à l'intérieur du corps principal (1), où l'arbre interne (3) et l'arbre externe (2) sont mobiles l'un par rapport à l'autre entre un premier état et un second état, l'arbre interne (3) étant davantage rétracté par rapport à l'arbre externe (2) dans le second état que dans le premier état et la broche d'usinage comprenant un agencement d'actionneur entraîné par pression de fluide (7) pour entraîner les arbres (2, 3) du premier état au second état et pour entraîner les arbres (2, 3) du second état au premier état, **caractérisée en ce qu'**au moins l'un de l'arbre interne (3) et de l'arbre externe (2) comprend au moins une partie d'un canal d'alimentation en fluide (9a, 9b) destiné à délivrer un fluide à l'agencement d'actionneur entraîné par pression de fluide (7).

2. Broche d'usinage selon la revendication 1, dans laquelle l'agencement d'actionneur entraîné par pression de fluide (7) est disposé à l'intérieur de l'arbre externe (2).

3. Broche d'usinage selon la revendication 1 ou la revendication 2, dans laquelle l'agencement d'actionneur entraîné par pression de fluide (7) est agencé pour tourner avec l'arbre externe (2).

4. Broche d'usinage selon l'une quelconque des revendications précédentes, dans laquelle l'agencement d'actionneur entraîné par pression de fluide (7) comprend un ensemble de piston à double effet (72).

5. Broche d'usinage selon l'une quelconque des revendications précédentes, dans laquelle l'agencement d'actionneur entraîné par pression de fluide (7) comprend une pluralité de pistons.

6. Broche d'usinage selon l'une quelconque des revendications précédentes, dans laquelle se trouvent deux canaux d'alimentation en fluide (9a, 9b), un premier des canaux (9b) étant destiné à délivrer un fluide à l'agencement d'actionneur entraîné par pression de fluide (7) pour entrainer les arbres du premier état au second état et un second des canaux (9a) étant destinée à délivrer un fluide à l'agencement d'actionneur entraîné par pression de fluide (7) pour entraîner les arbres du second état au premier état.

7. Broche d'usinage selon la revendication 6, dans laquelle au moins des parties respectives des premier et second canaux (9a, 9b) sont circonférentiellement espacées les unes des autres.

8. Broche d'usinage selon la revendication 6 ou la revendication 7, dans laquelle les premier et second canaux (9a, 9b) reçoivent chacun une admission (91a, 91b) respective destinée à recevoir un fluide d'entraînement et les admissions respectives sont espacées axialement l'une de l'autre.

9. Broche d'usinage selon la revendication 8, dans laquelle la broche comprend une partie d'alimentation en fluide (10) destinée à fournir un fluide aux canaux via les admissions respectives.

10. Broche d'usinage selon la revendication 9, dans laquelle la partie d'alimentation en fluide (10) définit une ouverture dans laquelle le composant (25) définissant les admissions de canal fait saillie.

11. Broche d'usinage selon la revendication 9 ou la revendication 10, dans laquelle la partie d'alimentation en fluide (10) comporte une surface qui fait face aux admissions (91a, 91b) en direction des canaux.

12. Broche d'usinage selon la revendication 11, dans laquelle la surface comprend deux refoulements (11a, 11b) qui sont espacés axialement l'un de l'autre.

13. Broche d'usinage selon la revendication 12, dans laquelle un premier des refoulements (11a) est agencé pour délivrer de l'air à une première des admissions (91a) et un second des refoulements (11b) est agencé pour délivrer de l'air à une seconde des admissions (91b).

14. Broche d'usinage selon la revendication 12 ou la revendication 13, dans laquelle chaque refoulement comporte une rainure (11a, 11b) associée disposée dans la surface de la partie d'alimentation en fluide de sorte qu'il existe deux rainures espacées axialement (11a, 11b) définies par la surface de la partie d'alimentation en fluide.

15. Broche d'usinage selon la revendication 13 ou la revendication 14, dans laquelle un premier des refoulements est aligné axialement avec une première des admissions et un second des refoulements est aligné axialement avec une seconde des admissions.

16. Broche d'usinage selon l'une quelconque des revendications 9 à 15, dans laquelle la partie d'alimentation en fluide (10) est généralement annulaire.

17. Broche d'usinage selon la revendications 16, lorsqu'elle dépend de la revendication 12, dans laquelle les refoulements sont disposés dans la surface circonférentielle interne de la partie d'alimentation en fluide (10) annulaire.

18. Broche d'usinage selon l'une quelconque des revendications 9 à 17, dans laquelle la partie d'alimentation en fluide (10) comprend un palier à joint d'étanchéité sans contact.

19. Broche d'usinage selon l'une quelconque des revendications précédentes, lorsqu'elle dépend de la revendication 6, dans laquelle l'arbre externe (2) comprend une partie d'extension (25) qui définit au moins une partie des premier et second canaux (9a, 9b) et s'étend au-delà d'une région occupée par l'arbre interne (3).

20. Broche d'usinage selon l'une quelconque des revendications précédentes, qui comprend une partie d'alimentation en fluide (10) comportant un alésage dans lequel est disposée une partie d'extension (25) de l'arbre externe (2) dans lequel un fluide doit être fourni, où une surface de l'alésage comprend deux rainures d'alimentation en fluide (11a, 11b) qui sont espacées axialement l'une de l'autre et sont agencées pour être alimentées séparément en fluide, et la partie d'extension (25) comprend deux canaux de fluide (9a, 9b) séparés ayant chacun une admission (91a, 91b) respective, les admissions (91a, 91b) étant espacées axialement l'une de l'autre et alignées chacune axialement avec une rainure respective des rainures (11a, 11b).

21. Broche d'usinage selon l'une quelconque des revendications précédentes, dans laquelle la broche comprend au moins une partie de butée fixe (23, 24, 33, 34) destinée à limiter le déplacement des arbres interne et externe (3, 2) l'un par rapport à l'autre.

22. Broche d'usinage selon la revendication 21, dans laquelle la partie de butée fixe (24, 34) est agencée pour déterminer les positions relatives des arbres interne et externe (3, 2) dans le premier état.

23. Broche d'usinage selon la revendication 22, dans laquelle une seconde partie de butée fixe (23, 33) est agencée pour déterminer les positions relatives des arbres interne et externe (3, 2) dans le second état.

24. Broche d'usinage selon la revendication 23, dans laquelle les arbres interne et externe (3, 2) comprennent des pentes d'accouplement (33, 23) respectives et les pentes d'accouplement, lorsqu'elles coopèrent totalement, déterminent les positions relatives des arbres interne et externe (3, 2) dans le second état.

25. Broche d'usinage selon l'une quelconque des revendications précédentes, dans laquelle l'agencement d'actionneur entraîné par pression de fluide (7) comprend un agencement d'actionneur pneumatique.

26. Broche d'usinage selon l'une quelconque des revendications précédentes, dans laquelle la broche comprend au moins un palier à air (4).
